# EUROPEAN PATENT APPLICATION

(11) **EP 4 468 317 A1**
(43) Date of publication of application: **27.11.2024**
(21) Application number: 23175091.0
(22) Date of filing: 24.05.2023
(51) Int. Cl.: H01G 4/224, H01G 9/08, H01G 11/82, H01G 2/10, H01G 9/008, H01G 9/14, H01G 11/10

(54) **CLAMP ARRANGEMENT FOR CYLINDRICAL OBJECT, CYLINDRICAL OBJECT ASSEMBLY COMPRISING SAID CLAMP ARRANGEMENT AND METHOD OF MANUFACTURING CYLINDRICAL OBJECT ASSEMBLY**

(71) Applicant: ABB SCHWEIZ AG, 5400 Baden (CH)
(72) Inventor: Nuotio, Marko, 00380 Helsinki (FI)
(74) Representative: Kolster Oy Ab

(57) **Abstract**

A clamp arrangement for a cylindrical object comprising a clamp member (2) adapted to receive an end of a cylindrical object (4), the clamp member (2) having an inner clamping surface (21) and an internal thread (218); a wedge (6) having an inner surface adapted to be in contact with a side surface of the cylindrical object (4), and an outer surface adapted to be in contact with the inner clamping surface (21); and a circular tightening member (8) having an external thread (828) compatible with the internal thread (218) of the clamp member (2), and an end surface (89) adapted to be in contact with an end surface (69) of the wedge (6). The clamp member (2), the wedge (6), and the circular tightening member (8) are adapted to co-operate with each other for fastening the cylindrical object (4) to the clamp member (2).

## Description

### FIELD OF THE INVENTION

The present invention relates to a clamp arrangement for a cylindrical object, a cylindrical object assembly comprising the clamp arrangement, and a method of manufacturing a cylindrical object assembly.

### BACKGROUND OF THE INVENTION

A known clamp arrangement for a cylindrical object is described in publication EP 4148 752 A1, in which a capacitor assembly is described. In said capacitor assembly, a cylindrical capacitor is clamped between a heat sink and a support element spaced apart in longitudinal direction of the cylindrical capacitor.

One of the disadvantages associated with the above clamp arrangement is that if the support element is adapted to be in contact with a plurality of cylindrical capacitors, the cylindrical capacitors must have same length. If the cylindrical capacitors have different lengths, only the longest cylindrical capacitor would be clamped properly while shorter ones would be clamped poorly or not at all.

### BRIEF DESCRIPTION OF THE INVENTION

An object of the present invention is to provide a clamp arrangement for a cylindrical object, a cylindrical object assembly comprising the clamp arrangement and a method of manufacturing a cylindrical object assembly so as to alleviate the above disadvantage. The objects of the invention are achieved by a clamp arrangement for a cylindrical object, a cylindrical object assembly comprising the clamp arrangement and a method of manufacturing a cylindrical object assembly which are characterized by what is stated in the independent claims. The preferred embodiments of the invention are disclosed in the dependent claims.

The invention is based on the idea of providing a clamp arrangement with a clamp member having an inner clamping surface and an internal thread, a wedge having an inner surface adapted to be in contact with a side surface of the cylindrical object, and an outer surface adapted to be in contact with the inner clamping surface, and a circular tightening member having an external thread compatible with the internal thread of the clamp member, and an end surface adapted to be in contact with an end surface of the wedge, wherein the clamp member, the wedge, and the circular tightening member are adapted to co-operate with each other for fastening the cylindrical object to the clamp member.

An advantage of the clamp arrangement of the invention is that the arrangement is capable of clamping a cylindrical object regardless of length thereof. Further, a clamp arrangement of the invention is capable of clamping cylindrical objects with minor differences in cross-sectional sizes.

### BRIEF DESCRIPTION OF THE DRAWINGS

In the following the invention will be described in greater detail by means of preferred embodiments with reference to the attached drawings, in which
Figure 1 shows components of a cylindrical object assembly according to an embodiment of the invention, and tools for assembling the cylindrical object assembly;
Figure 2 shows the cylindrical object assembly of Figure 1 in an assembled state;
Figure 3 shows the cylindrical object assembly of Figure 2 from another direction;
Figure 4 shows a cross-section of the cylindrical object assembly of Figure 2;
Figure 5 shows an enlarged detail of the cross-section of Figure 4; and
Figure 6 shows a cylindrical object assembly according to another embodiment of the invention, comprising six cylindrical object assemblies of Figure 2.

### DETAILED DESCRIPTION OF THE INVENTION

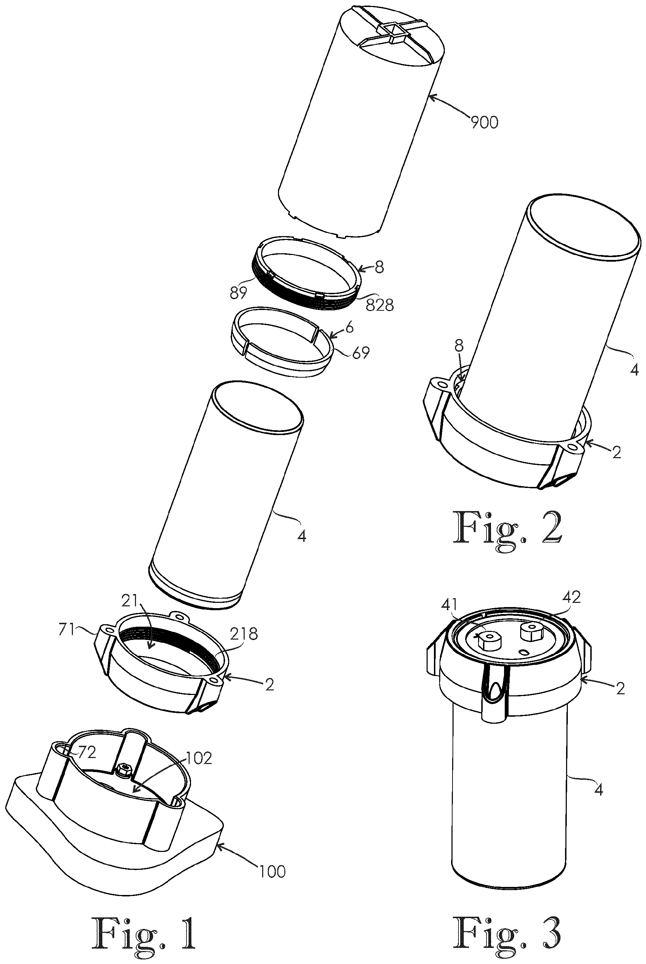

Figure 1 shows a cylindrical object 4 and components of a clamp arrangement adapted for clamping the cylindrical object 4. Consequently, Figure 1 shows components of a cylindrical object assembly comprising the clamp arrangement and the cylindrical object 4. Further, Figure 1 shows tools for assembling the cylindrical object assembly, the tools comprising an assembly tool 100 and a screwing tool 900.

The cylindrical object 4 is a capacitor whose body part has a circular cross section. The clamp arrangement comprises a clamp member 2, a wedge 6 and a circular tightening member 8. The clamp member 2 is adapted to receive an end of the cylindrical object 4. The clamp member 2 has an inner clamping surface 21 and an internal thread 218. The wedge 6 has an inner surface adapted to be in contact with a side surface of the cylindrical object 4, and an outer surface adapted to be in contact with the inner clamping surface 21. The circular tightening member 8 has an external thread 828 compatible with the internal thread 218 of the clamp member 2, and an end surface 89 adapted to be in contact with an end surface 69 of the wedge 6. The end surface 89 of the circular tightening member 8 and the end surface 69 of the wedge 6 are axial end surfaces. The clamp member 2, the wedge 6, and the circular tightening member 8 are adapted to co-operate with each other for fastening the cylindrical object 4 to the clamp member 2.

The wedge 6 is a two-piece object, wherein the wedge 6 is adapted to form a discontinuous ring around the cylindrical object 4 such that the discontinuous ring comprises two gaps in the circumferential direction. In an alternative embodiment, the wedge is a one-piece object, wherein the wedge is adapted to form a discontinuous ring around the cylindrical object such that the discontinuous ring comprises one gap in a circumferential direction. In a further alternative embodiment, the wedge is a multi-piece object, wherein the wedge is adapted to form a discontinuous ring around the cylindrical object such that the discontinuous ring comprises multiple gaps in a circumferential direction.

The wedge 6 is adapted to form a discontinuous ring around the cylindrical object 4 such that a centre line of the discontinuous ring coincides with a centre line of the cylindrical object 4.

A diameter of the cylindrical object 4 is 76 mm. An axial length of the cylindrical object 4 is 170 mm. In an alternative embodiment, a diameter of the cylindrical object is in a range of 20-200 mm, and an axial length of the cylindrical object is in a range of 30-400 mm.

An axial length of the wedge 6 is 14 mm. In an alternative embodiment, an axial length of the wedge is 4-20 % of an axial length of the cylindrical object.

Figure 2 shows the cylindrical object assembly of Figure 1 in an assembled state in which the cylindrical object 4 is fastened in the clamp member 2. Figure 3 shows the cylindrical object assembly of Figure 2 from another direction. Figure 3 shows that the capacitor has a first terminal 41 and a second terminal 42 located at a first axial end thereof. One of the first terminal 41 and the second terminal 42 is a positive terminal of the capacitor, and the other is a negative terminal of the capacitor.

Both the first terminal 41 and the second terminal 42 protrude from the first axial end of the capacitor and have non-circular cross sections. The cross sections of the first terminal 41 and the second terminal 42 each has generally a shape of a circle from which two segments have been cut off. The cross section of each terminal is symmetric. The cross sections of the first terminal 41 and the second terminal 42 have identical shapes but they are rotated 90° relative to each other.

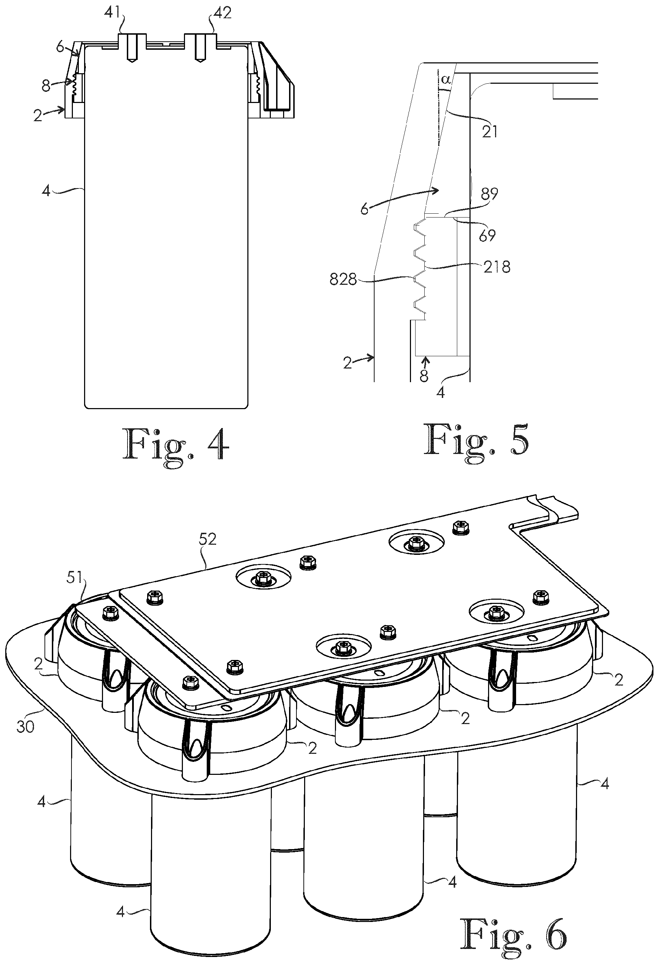

Figure 4 shows a cross-section of the cylindrical object assembly of Figure 2, and Figure 5 shows an enlarged detail of the cross-section of Figure 4. As best seen in Figure 5, the inner clamping surface 21 of the clamp member 2 is a bevelled surface which defines a receiving space inside thereof. The receiving space has a first cross-sectional area at a first axial end of the inner clamping surface 21, and a second cross-sectional area at a second axial end of the inner clamping surface 21 such that the first cross-sectional area is larger than the second cross-sectional area, wherein the receiving space is adapted to receive a portion of the cylindrical object 4 in a direction from the first axial end towards the second axial end. Both the first cross-sectional area and the second cross-sectional area are planar areas perpendicular to a centre line of the clamp member 2, wherein the centre line of the clamp member 2 is adapted to coincide with a centre line of the cylindrical object 4 when an end of a cylindrical object 4 is received in the clamp member 2.

In Figures 4 and 5, the first axial end of the inner clamping surface 21 is below the second axial end of the inner clamping surface 21.

The inner clamping surface 21 of the clamp member 2 defines a shape of a truncated cone which has a cone angle α. The cone angle α is slightly over 10°. In alternative embodiments, the cone angle is in the range of 5 - 20°.

Herein, expression "bevelled surface" is intended to be interpreted broadly such that the inner clamping surface does not has to taper smoothly. In an alternative embodiment, the inner clamping surface of the clamp member defines a shape of a spherical segment.

Figures 4 and 5 show that the outer surface of the wedge 6 has a bevelled portion adapted to be in contact with the inner clamping surface 21. An angle of the bevelled portion of the outer surface of the wedge 6 corresponds to the cone angle α. In an alternative embodiment, the outer surface of the wedge does not have a bevelled portion.

Figure 4 shows that the diameter of the cylindrical object 4 is smaller than a diameter of the receiving space at the second axial end of the inner clamping surface 21. This means that without the wedge 6, the cylindrical object 4 would fit pass entirely through the clamp member 2.

In the assembled state of the cylindrical object assembly, the wedge 6 is located axially closer to the second axial end of the inner clamping surface 21 than the circular tightening member 8. The circular tightening member 8 prevents the wedge 6 from moving axially in a direction from the second axial end towards the first axial end of the inner clamping surface 21. In a lateral direction, the wedge 6 is compressed between the clamp member 2 and the cylindrical object 4, wherein the lateral direction is perpendicular to the axial direction.

The wedge 6 is an injection moulded component made of plastic material. Material of the wedge 6 has a hardness in the Rockwell R (HRR) scale in a range of 100-140. In an alternative embodiment, material of the wedge has a hardness in a range of 80-160 HRR. In a further alternative embodiment, material of the wedge has a hardness greater than or equal to 60 HRR. Tests have shown that in embodiments in which the wedge is made of thermoplastic elastomer, too low hardness of the wedge incurs problems such as leakage of the wedge, which herein refers to a phenomenon in which a liquid material component leaks from the wedge due to a compressed state of the wedge.

In an embodiment, the clamp member, the wedge and the circular tightening member are made of the same material. In an alternative embodiment, materials of the clamp member and the circular tightening member have hardness in the range of 80-200% compared to the hardness of the wedge.

In an embodiment, a method of manufacturing a cylindrical object assembly comprises providing the clamp member 2, the wedge 6 and the circular tightening member 8, providing the cylindrical object 4, providing the assembly tool 100, providing the screwing tool 900, placing the assembly tool 100 in a predetermined position relative to the clamp member 2, receiving an end of the cylindrical object 4 in the clamp member 2, placing the cylindrical object 4 in contact with the assembly tool 100 in order to position the cylindrical object 4 in a predetermined position relative to the clamp member 2, placing the inner surface of the wedge 6 in contact with a side surface of the cylindrical object 4, placing the outer surface of the wedge 6 in contact with the inner clamping surface 21, and screwing the circular tightening member 8 by means of the screwing tool 900 into a connected position relative to the clamp member 2.

The assembly tool 100 is adapted to prevent rotation of the clamp member 2 relative to the assembly tool 100 when the assembly tool 100 is in the predetermined position relative to the clamp member 2. In order to achieve this, the clamp member 2 has clamp member protrusions 71, and the assembly tool 100 has assembly tool recesses 72 adapted to co-operate with the clamp member protrusions 71 of the clamp member 2 for preventing rotation of the clamp member 2 relative to the assembly tool 100.

The assembly tool 100 has a terminal positioning portion 102 adapted to place the first terminal 41 and the second terminal 42 of the capacitor in a predetermined position relative to the clamp member 2. Further, the terminal positioning portion 102 is adapted to place the capacitor in axial direction in a predetermined position relative to the clamp member 2.

The manufacturing method utilizing the assembly tool 100 comprises placing the first terminal 41 and the second terminal 42 in contact with the terminal positioning portion 102 for placing the first terminal 41 and the second terminal 42 in the predetermined position relative to the clamp member 2.

The terminal positioning portion 102 comprises a first terminal positioning recess adapted to receive the first terminal 41, and a second terminal positioning recess adapted to receive the second terminal 42. Shape and size of the first terminal positioning recess and the second terminal positioning recess are selected such that they substantially allow only one position for the capacitor relative to the assembly tool 100 when the first terminal 41 is received in the first terminal positioning recess and the second terminal 42 is received in the second terminal positioning recess. The first terminal positioning recess and the second terminal positioning recess are not shown in Figure 1.

In an embodiment, both the first terminal and the second terminal protrude from the first axial end of the capacitor and have a circular cross section. In order to enable operation of the terminal positioning portion of the assembly tool, the first terminal and the second terminal are located in distinguishable positions on the first axial end of the capacitor. Herein, expression "in distinguishable positions" simply means that location of the first and second terminals on the end surface of the capacitor is adapted to distinguish the first and second terminals from each other. An example of distinguishable positions of the first terminal and the second terminal is a layout in which both the first terminal and the second terminal are located on the same half of the axial end surface of the capacitor, wherein the axial end surface of the capacitor is divided into halves by a plane on which the centre axis of the capacitor is located.

In addition to the distinguishable positions discussed above, distinguishable shapes and distinguishable orientations of the first terminal and the second terminal can be used to enable operation of the terminal positioning portion of the assembly tool. The distinguishable shapes means that a cross section of the first terminal is different from a cross section of the second terminal. Herein, the shape also covers size of the terminals since the terminals can be unambiguously distinguished from each other by designing one of the terminals substantially larger than the other terminal. The distinguishable orientations means that while cross sections of the first terminal and the second terminal are identical with each other, orientations of the first terminal and the second terminal are different from each other. An example of the distinguishable orientations is shown in Figure 3 in which cross sections of the first terminal 41 and the second terminal 42 are identical but orientation of the first terminal 41 and the second terminal 42 are different from each other. Basically, the different orientation of the first terminal 41 and the second terminal 42 is achieved by rotating one of the terminals around an axis passing through the terminal and being parallel to the centre axis of the capacitor.

In an embodiment of the manufacturing method, the terminal positioning portion 102 of the assembly tool 100 faces upwards. First, the assembly tool 100 is placed in a predetermined position relative to the clamp member 2. Then the capacitor is placed in contact with the assembly tool 100 in order to position the capacitor in a predetermined position relative to the clamp member 2. Then the wedge 6 is dropped into its place around the capacitor, in which place the outer surface of the wedge 6 is in contact with the inner clamping surface 21. Due to the positions of the clamp member 2 and the capacitor, the wedge 6 is kept in place by gravity. Finally, the circular tightening member 8 is screwed into a connected position relative to the clamp member 2 by the screwing tool 900.

It should be noted that both the assembly tool 100 and the screwing tool 900 are tools used for assembling the cylindrical object assembly. The assembly tool 100 and the screwing tool 900 are not part of the cylindrical object assembly. Instead, the assembly tool 100 and the screwing tool 900 are removed after manufacturing the cylindrical object assembly is finished.

Figure 6 shows a cylindrical object assembly according to another embodiment of the invention, comprising six cylindrical object assemblies of Figure 2, a frame part 30, a first bus bar 51 and a second bus bar 52. The six cylindrical object assemblies of Figure 2 are fastened to the frame part 30 such that centre axes of the capacitors are parallel to each other, and the first axial ends of the capacitors are located on a single plane which is perpendicular to the centre axes of the capacitors.

The first bus bar 51 is electrically conductively connected to the first terminals 41 of the six capacitors, and the second bus bar 52 is electrically conductively connected to the second terminals 42 of the six capacitors. There is an insulating plate between the first bus bar 51 and the second bus bar 52.

It will be obvious to a person skilled in the art that the inventive concept can be implemented in various ways. The invention and its embodiments are not limited to the examples described above but may vary within the scope of the claims.

## Claims

1. A clamp arrangement for a cylindrical object comprising:
a clamp member (2) adapted to receive an end of a cylindrical object (4), the clamp member (2) having an inner clamping surface (21) and an internal thread (218);
a wedge (6) having an inner surface adapted to be in contact with a side surface of the cylindrical object (4), and an outer surface adapted to be in contact with the inner clamping surface (21); and
a circular tightening member (8) having an external thread (828) compatible with the internal thread (218) of the clamp member (2), and an end surface (89) adapted to be in contact with an end surface (69) of the wedge (6),
wherein the clamp member (2), the wedge (6), and the circular tightening member (8) are adapted to co-operate with each other for fastening the cylindrical object (4) to the clamp member (2).

2. The clamp arrangement according to claim 1, wherein the wedge (6) is adapted to form a discontinuous ring around the cylindrical object (4) such that the discontinuous ring comprises at least one gap in a circumferential direction.

3. The clamp arrangement according to claim 2, wherein the wedge (6) is a two-piece object, wherein the wedge (6) is adapted to form a discontinuous ring around the cylindrical object (4) such that the discontinuous ring comprises two gaps in the circumferential direction.

4. The clamp arrangement according to any one of claims 1 to 3, wherein the inner clamping surface (21) of the clamp member (2) is a bevelled surface which defines a receiving space inside thereof, wherein the receiving space has a first cross-sectional area at a first axial end of the inner clamping surface (21), and a second cross-sectional area at a second axial end of the inner clamping surface (21) such that the first cross-sectional area is larger than the second cross-sectional area, wherein the receiving space is adapted to receive a portion of the cylindrical object (4) in a direction from the first axial end towards the second axial end.

5. The clamp arrangement according to claim 4, wherein the inner clamping surface (21) of the clamp member (2) defines a shape of a truncated cone which has a cone angle (α) in the range of 5 - 20°.

6. The clamp arrangement according to any one of preceding claims, wherein material of the wedge (6) has a hardness greater than or equal to 60 HRR.

7. The clamp arrangement according to claim 6, wherein materials of the clamp member (2) and the circular tightening member (8) have hardness in the range of 80-200% compared to the hardness of the wedge (6).

8. The clamp arrangement according to claim 6, wherein the clamp member (2), the wedge (6) and the circular tightening member (8) are made of the same material.

9. A cylindrical object assembly comprising at least one clamp arrangement according to any one of claims 1 to 5, and a cylindrical object (4) for each of the at least one clamp arrangement such that each of the cylindrical objects (4) is fastened in a corresponding clamp member (2).

10. The cylindrical object assembly according to claim 9, wherein each of the cylindrical objects (4) is a capacitor comprising a first terminal (41) and a second terminal (42) located at a first axial end of the capacitor.

11. The cylindrical object assembly according to claim 10, wherein the first terminal (41) and the second terminal (42) are located in distinguishable positions, have distinguishable shapes and/or have distinguishable orientations on the first axial end of the capacitor.

12. A method of manufacturing a cylindrical object assembly, wherein the method comprises:
providing a clamp arrangement according to any one of the claims 1-8;
providing a cylindrical object (4);
receiving an end of the cylindrical object (4) in the clamp member (2);
placing the inner surface of the wedge (6) in contact with a side surface of the cylindrical object (4);
placing the outer surface of the wedge (6) in contact with the inner clamping surface (21); and
screwing the circular tightening member (8) into a connected position relative to the clamp member (2).

13. The method according to claim 12, wherein the method comprises:
providing an assembly tool (100);
placing the assembly tool (100) in a predetermined position relative to the clamp member (2),
placing the cylindrical object (4) in contact with the assembly tool (100) in order to position the cylindrical object (4) in a predetermined position relative to the clamp member (2), and
removing the assembly tool (100) subsequent to screwing the circular tightening member (8) into the connected position relative to the clamp member (2).

14. The method according to claim 13, wherein the cylindrical object (4) is a capacitor which has a first terminal (41) and a second terminal (42) on a first axial end thereof, wherein the assembly tool (100) has a terminal positioning portion (102) adapted for placing the first terminal (41) and the second terminal (42) in a predetermined position relative to the clamp member (2), wherein the method comprises placing at least one of the first terminal (41) and the second terminal (42) in contact with the terminal positioning portion (102) for placing the first terminal (41) and the second terminal (42) in a predetermined position relative to the clamp member (2).
